(19) Europäisches Patentamt
European Patent Office
Office européen des brevets

(11) **EP 1 592 306 B1**

(12) **EUROPÄISCHE PATENTSCHRIFT**

(45) Veröffentlichungstag und Bekanntmachung des Hinweises auf die Patenterteilung:
**15.11.2006 Patentblatt 2006/46**

(51) Int Cl.:
*A23C 9/13* (2006.01)     *A23L 1/19* (2006.01)
*A23G 3/00* (2006.01)     *A23L 1/00* (2006.01)

(21) Anmeldenummer: **04710375.9**

(22) Anmeldetag: **12.02.2004**

(86) Internationale Anmeldenummer:
**PCT/EP2004/001307**

(87) Internationale Veröffentlichungsnummer:
**WO 2004/071204 (26.08.2004 Gazette 2004/35)**

(54) **AUF MILCHBESTANDTEILEN BASIERENDE SÜSSWARE MIT DEFINIERTEN SPEISEFETTAGGLOMERATEN, SOWIE VERFAHREN UND VORRICHTUNG ZU IHRER HERSTELLUNG**

MILK COMPONENT-BASED SWEET COMPRISING DEFINED EDIBLE FAT AGGLOMERATES, AND METHOD AND DEVICE FOR THE PRODUCTION THEREOF

ARTICLE DE CONFISERIE A BASE DE COMPOSANTS DU LAIT, COMPRENANT DES AGGLOMERATS DE GRAISSE ALIMENTAIRE DEFINIS, ET PROCEDE ET SYSTEME DE FABRICATION DE CET ARTICLE

(84) Benannte Vertragsstaaten:
**AT BE BG CH CY CZ DE DK EE ES FI FR GB GR HU IE IT LI LU MC NL PT RO SE SI SK TR**

(30) Priorität: **14.02.2003 DE 10306259**

(43) Veröffentlichungstag der Anmeldung:
**09.11.2005 Patentblatt 2005/45**

(73) Patentinhaber:
• **Ferrero oHG mbH**
**35260 Stadtallendorf (DE)**
Benannte Vertragsstaaten:
**BG CY DE DK EE FI IE LU MC NL PT RO SI SK**
• **Ferrero S.p.A.**
**12051 Alba (Cuneo) (IT)**
Benannte Vertragsstaaten:
**IT**
• **SOREMARTEC S.A.**
**6700 Arlon-Schoppach (BE)**
Benannte Vertragsstaaten:
**AT BE CH CZ ES FR GB GR HU LI SE TR**

(72) Erfinder: **VENNERI, Salvatore**
**35274 Kirchhain (DE)**

(74) Vertreter: **HOFFMANN EITLE**
**Patent- und Rechtsanwälte**
**Arabellastrasse 4**
**81925 München (DE)**

(56) Entgegenhaltungen:
**WO-A-01/56400**     **DE-A- 3 015 825**
**DE-A- 3 727 680**     **DE-C- 4 344 534**
**US-A- 5 520 946**

**Beschreibung**

Die Erfindung betrifft eine auf Milchbestandteilen basierende Süßware, sowie ein Verfahren und eine Vorrichtung zu ihrer Herstellung.

In der DE- 30 15 825 C2 ist eine lang haltbare Süßware in Form einer weichen, mit einem Inertgas geschäumten Masse auf Basis einer Öl-in-Wasser-Emulsion beschrieben, die Milchbestandteile, Speisefett, Zucker, Monoglyceride und Wasser enthält, sowie einen pH-Bereich von 6,2 bis 7,5 aufweist. Die Konsistenz der Süßware reicht von einer streichfähigen Creme bis zu einer verhältnismäßig dichten, schnittfesten Paste. Sie ist formfest und lange haltbar und weist keine vom Konsumenten wahrnehmbaren Laktosekristalle auf. Weiterhin ist wenigstens ein Teil des Speisefettes in kristallisierter Form enthalten. Bei der Herstellung dieser Süßware wird von gezuckerter, teilentrahmter Kondensmilch ausgegangen, die den Hauptbestandteil einer wässrigen Phase bildet, die mit einer Speisefette und Monoglyceride enthaltenden Ölphase zu einer Öl-in-Wasser-Emulsion verarbeitet wird. Im Anschluss daran wird die Emulsion pasteurisiert, mit Laktosekeimkristallen versetzt und durch Einblasen von Inertgas aufgeschäumt. Unter Rühren und Abkühlen der Emulsion wird wenigstens ein Teil des Speisefettes kristallisiert.

Bei der Herstellung von Kondensmilch werden üblicherweise Temperaturen von 100 bis zu 120˚C für 1 bis 3 Minuten beim Pasteurisieren der Milch und von 65 bis 70˚C beim Eindampfen der Milch eingesetzt, die zu einer teilweisen Denaturierung der Molkenproteine führen.

Weiterhin beschreibt die DE-43 44 534 C1 eine aufgeschäumte Milchcreme, die hergestellt wird, indem man eine auf einen bestimmten Fettgehalt und Eiweißgehalt eingestellte Milch und/oder Milchprodukte zur Denaturierung der Serumproteine und aus bakteriologischen Gründen erhitzt, anschließend Honig, Trockenkomponenten und geschmacksgebende Substanzen in die Milch einrührt, eine Mischung aus Fett bzw. Fetten mit Emulgatoren und/oder Stabilisatoren herstellt, diese Mischung mit der zuvor hergestellten Milchmischung vermengt und aus bakteriologischen Gründen erhitzt, anschließend die Mischung auf Aufschlagtemperatur abkühlt, die Mischung aufschlägt, die aufgeschlagene Mischung abkühlt und kristallisieren lässt.

Das oben beschriebene Verfahren führt jedoch zu einer Süßware, die in einem beträchtlichen Anteil denaturierte Molkenproteine enthält.

Zum Stand der Technik gehören weiterhin Süßwaren, die aus frischer pasteurisierter Vollmilch (Frischmilch) und Magermilchpulver als Milchgrundlage hergestellt werden. Hierbei weist das Magermilchpulver aufgrund der hohen Temperaturen bei der Herstellung einen größeren Gehalt an denaturierten Molkenproteinen und auch einen höheren Verlust an Vitaminen auf.

Aus ernährungsphysiologischen Gründen ist jedoch das Vorliegen von natürlichem Milcheiweiß (geringer Denaturierungsgrad der Molkenproteine) bei einem hohen Milcheiweißgehalt und bei einer hohen Milchtrockenmasse wünschenswert.

Zum Stand der Technik zählen auch auf Yoghurt und Quark basierende Süßwaren gemäß DE-3727680 C2, die jedoch einen hohen Anteil denaturierter Molkenproteine enthalten. Im Handel befindliche Produkte wie Kyr (Parmalat) und Merenda allo Yogurt (Plasmon) zeigen einen Denaturierungsgrad deutlich oberhalb von 20 %. Des weiteren bilden die Speisefette in diesen Produkten Agglomerate, die eine volumenbezogene Teilchengröße D50,3 von 27 $\mu$m bzw. 50 $\mu$m aufweisen. Die Teilchengröße D50,3 gibt den Teilchendurchmesser an, unter dem 50 % des Gesamtteilchenvolumens liegen.

Der Stand der Technik umfasst weiterhin Speiseeiscremes mit einem Milcheiweißgehalt von 1,5 bis 5 Gew.-%, einer fettfreien Milchtrockenmaße von 4 bis 12 Gew.-% und mit einem Speisefettgehalt von 10 bis 14 Gew.-%, jeweils bezogen auf das Gesamtgewicht des Speiseeises. Mehrere untersuchte Handelsmuster von Speiseeiscremes zeigten weiterhin einen Fettagglomeratdurchmesser D50,3 zwischen 19 und 30 $\mu$m.

In der DE-100 05 374 A1 ist eine lang haltbare Süßware in Form einer weichen, cremigen, formstabilen und aufgeschäumten Masse beschrieben, die Milchbestandteile, Speisefette, Zucker und/oder Zuckerersatzstoffe und Wasser umfasst, wobei wenigstens ein Teil des Speisefettes bei Raumtemperatur in kristallisierter Form enthalten ist, wobei die Süßware keine vom Konsumenten wahrnehmbaren Laktosekristalle enthält, und wobei der Milcheiweißgehalt 6-20 Gew.% beträgt, die fettfreie Milchtrockenmasse bei 16-55 Gew.% liegt, und der Denaturierungsgrad der Molkenproteine < 10 % ist. Diese Süßwaren, hergestellt nach dem in der DE-100 05 374 A1 beschriebenen Verfahren, zeigen eine volumenbezogene Teilchengröße D50,3 der Speisefettagglomerate im Bereich von 1,5 bis 2,5 $\mu$m.

Die der Erfindung zu Grunde liegende Aufgabenstellung besteht darin, eine Süßware bereitzustellen, die eine weiter verbesserte Stabilität im Sinne einer höheren Haltbarkeit und einer zeitlich längeren Beibehaltung der charakteristischen Eigenschaften wie Weichheit, Cremigkeit, Formstabilität, frischer Geschmack und Milcharoma zeigt.

Die obige Aufgabe wird durch eine lang haltbare Süßware mit den in Anspruch 1 beschriebenen Eigenschaften gelöst, die im Folgenden näher erörtert werden.

Die erfindungsgemäße Süßware zeigt eine volumenbezogene Teilchengröße D50,3 der Speisefettagglomerate von 3,5 bis 18 $\mu$m, die eine verbesserte Stabilisierung der Struktur bewirkt, wodurch sich die Langzeitstabilität erhöht, und auch die vorteilhaften Eigenschaften längere Zeit beibehalten werden. Insbesondere kommt es durch die verbesserte Stabilisierung zu einer geringen Entmischungstendenz.

Die erfindungsgemäße Süßware weist eine verlängerte Haltbarkeit auf. Dies bedeutet, dass sie bei Kühllagerung (< 12˚C), z.B. im Kühlschrank oder im Kühlregal, mindestens 9 Monate haltbar ist, d.h. mikrobiologisch nicht zu beanstanden ist. Die lange Haltbarkeit der erfindungsgemäßen Süßware resultiert im wesentlich aus ihrem Milchtrockenmasse- und ihrem Zucker- bzw. Zuckerersatzstoffgehalt, der definierten Agglomeratteilchengröße des dispergierten Speisefettes sowie einem Pasteurisierungsvorgang bei ihrer Herstellung. Milcheiweiß und Zucker bzw. Zuckerersatzstoffe führen zu einer Wasserbindung und einer Herabsetzung der Wasseraktivität. Vorzugsweise liegt die Wasseraktivität aw bei < 0,9.

Weiterhin ist die erfindungsgemäße Süßware weich und damit auch gut streichfähig. Der Begriff "weich" charakterisiert die Festigkeit der Süßware und lässt sich durch die effektive Viskosität beschreiben, die bei einem Schergefälle von 0,5s-1 und bei einer Temperatur von 20˚C vorzugsweise Werte von 100-5000 Pas, insbesondere bevorzugt von 500-2000 Pas aufweist. Durch die erfindungsgemäße Agglomeratteilchengröße des in der Süßware dispergiert vorliegenden Speisefettes kann die Weichheit der Süßware über einen langen Zeitraum erhalten werden.

Die cremige Konsistenz der erfindungsgemäßen Süßware wird insbesondere über die Milchtrockenmasse, den Schmelzbereich der Fette, den Zucker- und Zuckerersatzstoffanteil und den Wassergehalt eingestellt. Eine Süßware gilt als "cremig", wenn ihre effektive Viskosität mit steigendem Schergefälle abnimmt. Dementsprechend wird die Eigenschaft der Cremigkeit der erfindungsgemäßen Süßware messtechnisch über den Viskositätsverlauf in Abhängigkeit vom Schergefälle nachgewiesen. Durch das Vorhandsein der Speisefettagglomerate in Form von Teilchen mit einem D50,3-Wert von 3,5 bis 18 $\mu$m lässt sich auch die cremige Konsistenz der Süßware über einen langen Zeitraum aufrechterhalten.

Die erfindungsgemäße Süßware ist weiterhin formstabil (formfest). Dies bedeutet rheologisch gesehen, dass sie eine Fließgrenze aufweist und somit unter dem Einfluss der Schwerkraft nicht fließt. Die Formstabilität wird durch die erfindungsgemäße Teilchengröße der Speisefettagglomerate weiterhin verbessert, da die Gefahr einer Entmischung der wässrigen Phase und der Speisefettphase der Süßware abnimmt.

Des weiteren ist die erfindungsgemäße Süßware geschäumt und zeichnet sich vorzugsweise durch eine Dichte von 0,55-0,75 g/cm3 und eine spezifische Grenzfläche von 700-2500 cm2/cm3 aus.

Die Milchbestandteile in der erfindungsgemäßen Süßware beinhalten die aus der Milch stammenden Milchproteine, den Milchzucker (Laktose), die Milchsalze und die Vitamine der Milch, und auch das Milchfett. Für die Herstellung der Süßware kann neben Vollmilch, teilentrahmter Milch oder Magermilch auch hieraus hergestellter Joghurt oder Sauermilch verwendet werden.

Die in der erfindungsgemäßen Süßware beinhalteten Speisefette setzen sich aus dem Milchfett und/oder bei der Herstellung zugesetzten pflanzlichen und/oder tierischen Fette, wie z.B. Palmöl, Butterreinfett, Margarine zusammen. Vorzugsweise liegt der Gesamtspeisefettgehalt in der erfindungsgemäßen Süßware bei 15-50 Gew.%, insbesondere bevorzugt bei 20-45 Gew.%. Hierbei liegt wenigstens ein Teil des Fettes bei Raumtemperatur in kristallisiertem Zustand vor. Vorzugsweise beträgt dabei die Schmelzenthalpie des Fettes mindestens 10 Joule/g in einem Temperaturbereich von 20 bis 50˚C. Weiterhin ist die Teilchengröße D50,3 der kristallisierten und nichtkristallisierten Speisefettagglomerate vorzugsweise 4,0 bis 16 $\mu$m, und insbesondere bevorzugt 4,5 bis 14 $\mu$m.

Der Zucker in der erfindungsgemäßen Süßware beinhaltet die aus der Milch stammende Laktose und bei der Herstellung zugesetzten Zucker, z.B. in Form von Honig, Saccharose, Laktose, Glucose, Fruktose, Maltose und Galaktose. Der Zuckergehalt der erfindungsgemäßen Süßware kann ganz oder teilweise durch Zuckerersatzstoffe, wie z.B. Zuckeraustauschstoffe (z.B. Sorbitol, Maltitol, Isomaltol, Xylitol), Oligosaccharide und Oligofructose, ersetzt werden. Vorzugsweise liegt der Gesamtgehalt an Zucker- und Zuckerersatzstoffen im Bereich von 8-45 Gew.%, insbesondere bevorzugt bei 10-40 Gew.%.

Gemäß einer weiteren bevorzugten Ausführungsform der erfindungsgemäßen Süßware liegt der Wassergehalt bei 13 bis 45 Gew.%, insbesondere bevorzugt bei 20 bis 35 Gew.%.

Die erfindungsgemäße Süßware hat bei der Herstellung aus unfermentierten Milchprodukten einen pH-Wert, der typischerweise im Bereich von 6,2-7,5 liegt. Bei der Herstellung der Süßware unter Verwendung von Joghurt bzw. Sauermilch liegt der pH-Wert vorzugsweise bei 4,0 bis 5,5, insbesondere bevorzugt bei 4,2 bis 4,8.

Die erfindungsgemäße Süßware kann weiterhin Emulgatoren, vorzugsweise Mono- und/oder Diglyceride, üblicherweise in einer Menge von 0 bis 1 Gew.% enthalten.

Ferner können in der erfindungsgemäßen Süßware weitere Zutaten beinhaltet sein. Hierbei können zur Einstellung der Konsistenz Ballaststoffe, Oligosaccharide und Polysaccharide, wie z.B. Stärke oder Maltodextrin, verwendet werden. Für die Einstellung der Geschmacks- und Farbrichtung können z.B. Kakao, Aromen, Süß- und Farbstoffe beinhaltet sein. Zur Steigerung der physiologischen Wertigkeit der erfindungsgemäßen Süßware können auch beispielsweise sekundäre Pflanzenextrakte, Prebiotika und Probiotika beigegeben sein.

Die erfindungsgemäße Süßware zeichnet sich durch eine hohe (fettfreie) Milchtrockenmasse und einen hohen Milcheiweißgehalt aus, wobei gleichzeitig der Denaturierungsgrad der Molkenproteine sehr gering ist. Mit dem geringen Denaturierungsgrad verbindet sich eine geringe Eiweißschädigung und damit ein hoher Gehalt (Prozentsatz)an nativem Milcheiweiß und somit auch geringe Vitamineinbußen in Bezug auf das bei der Herstellung eingesetzte Milchausgangsprodukt

Vorzugsweise beträgt die fettfreie Milchtrockenmasse 14 bis 37 Gew.%. Weiterhin liegt der Milcheiweißgehalt bevorzugt bei 5,5 - 14 Gew.%.

Der geringe Denaturierungsgrad (≤ 10 %) in der erfindungsgemäßen Süßware hat ein sehr intensives Milcharoma zur Folge. Darüber hinaus ist es möglich, die erfindungsgemäße Süßware ohne Emulgatoren herzustellen. In einer weiteren bevorzugten Ausführungsform ist der Denaturierungsgrad der Molkenproteine 0%, d.h. nicht mehr nachweisbar.

Ein hoher naturbelassener Milcheiweißgehalt ist ernährungsphysiologisch bedeutend, da native Eiweiße im menschlichen Körper vollständig verwertbar sind.

Die erfindungsgemäße Süßware beinhaltet die Speisefette (kristallisiert und nicht-kristallisiert) in einer Agglomeratteilchengröße D50,3 von 3,5 bis 18 μm, vorzugsweise 4,0 bis 16 μm, und insbesondere bevorzugt 4,5 bis 14 μm. Die obige definierte Teilchengröße bewirkt, dass die Struktur der Süßware länger erhalten bleibt, da die Tendenz einer Entmischung der wässrigen Phase und der Speisefettphase abnimmt. Dies bedingt gleichzeitig eine Erhöhung der mikrobiologischen Haltbarkeit, der Formstabilität aber auch eine Beibehaltung der Weichheit, Cremigkeit und des intensiven Milcharomas und Geschmacks über einen längeren Zeitraum.

Die Speisefettagglomerate bestehen in der erfindungsgemäßen Süßware aus einzelnen Fetttröpfchen, die an einzelnen Stellen durch Brücken miteinander verbunden sind. Diese Brücken bestimmen in entscheidendem Maße die Fließgrenze des Schaumes und damit seine Stabilität gegenüber dem Einfluss der Schwerkraft (Formstabilität). Die Brücken schaffen aber keine großen, kompakten Speisefettteilchen, sondern können unter Einfluss von Temperatur und Scherung (typische Beanspruchung im Mund) wieder aufgelöst werden. Dann liegt das Speisefett wieder in Form von kleinen Einzeltröpfchen vor, was einen cremigsahnigen Verzehrseindruck hervorruft. Sind die Speisefettagglomerate aber zu groß, können sie nicht in der selben Geschwindigkeit in kleine Einzelteilchen abgebaut werden, und der Verzehrseindruck ist nicht sahnig-cremig, sondern fettig, weil zu viel Fläche im Mund gleichzeitig mit Fett bedeckt ist. Aus diesem Grund wurde erfindungsgemäß festgestellt, dass die Agglomeratteilchengröße der Speisefette einerseits nicht zu klein, andererseits aber auch nicht zu groß sein darf.

Die erfindungsgemäße Süßware kann über ein Verfahren hergestellt werden, das die folgenden Schritte umfasst:

a) Vermischen von pasteurisierter frischer Vollmilch, saurer Vollmilch oder Vollmilchjoghurt und/oder pasteurisierter frischer teilentrahmter Milch, saurer teilentrahmter Milch oder teilentrahmtem Milchjoghurt und/oder pasteurisierter frischer Magermilch, saurer Magermilch oder Magermilchjoghurt mit Zucker und/oder Zuckerersatzstoffen und gegebenenfalls weiteren Zutaten;

b) Einstellen der im Schritt a) erhaltenen Mischung durch schonendes Eindampfen bei einer Temperatur von ≤ 60°C und bei einem Druck von < 1 bar oder durch Gefriertrocknen auf den gewünschten Trockensubstanzgehalt;

c) Eindispergieren einer Speisefette und ggf. Emulgatoren umfassenden Fettphase in die im Schritt b) erhaltene, konzentrierte wässrige Mischung über einen rotierenden mikroporösen Membranhohlzylinder, dessen Außenfläche der wässrigen Phase und die Innenfläche der Fettphase zugewandt ist, wobei die der wässrigen Phase zugewandte Fläche eine äußere Membranschicht mit Poren ≤ 1 μm aufweist;

d) Pasteurisieren der im Schritt c) erhaltenen Süßware bei Temperaturen von maximal 80°C;

e) Abkühlen der Süßware, ggf. Einmischen von Laktosemikrokristallen, Aufschäumen der Süßware durch Einblasen von Gas und Auskristallisieren wenigstens eines Teils des Speisefettes der Süßware.

Das erfindungsgemäße Herstellungsverfahren wird im folgenden in Bezug auf einzelne Herstellungsschritte näher beschrieben.

Im Schritt a) wird pasteurisierte frische Vollmilch, saure Vollmilch oder Vollmilchjoghurt bzw. pasteurisierte frische teilentrahmte Milch, saure teilentrahmte Milch oder teilentrahmter Milchjoghurt bzw. pasteurisierte frische Magermilch, saure Magermilch oder Magermilchjoghurt eingesetzt. Die frische Milch, die als solche oder als saure Milch oder als Milchjoghurt eingesetzt wird, hat gemäß der Milchverordnung eine Kurzzeiterhitzung im kontinuierlichen Durchfluss bei 72 bis 75°C mit einer Heißhaltezeit von 15 bis 30 Sekunden durchlaufen und weist nach der Kurzzeiterhitzung einen negativen Phosphatase- und einen positiven Peroxidasenachweis auf.

Die so pasteurisierte frische Vollmilch (saure Vollmilch, Vollmilchjoghurt) bzw. pasteurisierte frische teilentrahmte Milch (saure Milch, Milchjoghurt) bzw. pasteurisierte frische Magermilch (saure Magermilch, Magermilchjoghurt) wird mit Zucker und/oder Zuckerersatzstoffen vermischt. Das Vermischen erfolgt hierbei in der Regel bei einer Temperatur von ≤ 60˚C und kann in einer kontinuierlich betriebenen Mischvorrichtung oder in Chargenbehältern erfolgen.

Zur Einstellung der Konsistenz, der Geschmacks- und Farbrichtung und der physiologischen Wertigkeit können in die Milch, die saure Milch bzw. den Milchjoghurt zusätzlich auch andere Zutaten eingemischt werden, wie z.B. Polysaccharide, Kakao, Aromen, wie z.B. Vanillin, Süß- und Farbstoffe, sekundäre Pflanzenextrakte, Probiotika, Prebiotika.

Die Konzentrierung auf den gewünschten Trockensubstanzgehalt gemäß Herstellungsschritt b) erfolgt beispielsweise in einem Eindampfer bei Temperaturen von ≤ 60˚C und bei einem Unterdruck von < 1 bar oder durch Gefriertrocknung.

Bei der Herstellung gemäß Schritt c) wird die im Schritt b) erhaltene wässrige Phase (konzentrierte Mischung) vorzugsweise in einer Menge von 50 bis 85 Gew.% vorgelegt und mit der Fettphase vorzugsweise in einer Menge von 15 bis 50 Gew.% vermischt.

Als Fettphase werden üblicherweise pflanzliche und/oder tierische Fette eingesetzt, wie z.B. Palmöl, Butterreinfett, Margarine, die allesamt Speisefette darstellen. Der Einsatz von Emulgatoren, bevorzugt Mono- oder Diglyceride, ist möglich.

Bei dem rotierenden mikroporösen Membrandispergierverfahren wird die zu dispergierende Speisefettphase durch den rotierenden mikroporösen Membranhohlzylinder hindurch, von innen nach außen, in die vorbei strömende (kontinuierliche) wässrige Phase unter einstellbaren Zentrifugalkräften eingebracht.

Das Eindispergieren im Schritt c) erfolgt üblicherweise bei einer Temperatur von ≤ 60˚C, so dass während des Eindispergierens die flüssigen Phasen bestehen bleiben.

Bei der Herstellungsstufe c) wird weiterhin ein Druck von 0-5 bar, vorzugsweise von 0,8-1,5 bar angelegt. Der Druck hat einen Einfluss auf den Volumenstrom des Fettes durch den rotierenden Membrankörper. Je größer der Druck, um so größer wird bei sonst gleichen Bedingungen auch die Fetttröpfchengröße.

Die Umfangsgeschwindigkeit des rotierenden mikroporösen Membranhohlzylinders ist über die Drehzahl und den Außendurchmesser des Membrankörpers einstellbar und liegt vorzugsweise bei 0,35 - 35 m/s, insbesondere bevorzugt bei 1,4 - 11 m/s.

Das Eindispergieren im Herstellungsschritt c) bedingt eine minimale Scherung, sodass eine Denaturierung weitgehend ausgeschlossen wird, und somit insgesamt sehr niedrige Denaturierungsgrade von < 10%, insbesondere bevorzugt von 0% (Denaturierung unterhalb der Nachweisgrenze) erzielt werden.

Vorzugsweise wird ein mikroporöses Glassinterrohr als Membranhohlzylinder eingesetzt. Ein solches Glassinterrohr besteht vorzugsweise aus einem Glassinterstützkörper mit Poren von 5-25 $\mu$m und einer äußeren Sinterglasschicht mit einer Porengröße von < 1 $\mu$m, insbesondere bevorzugt 0,4-0,8 $\mu$m, und speziell bevorzugt 0,7-0,8 $\mu$m. In einer weiteren bevorzugten Ausführungsform besteht die Sinterglasschicht aus mehreren gesinterten Schichten, wobei die Schicht mit der geringsten durchschnittlichen Porengröße die Grenzfläche zu der kontinuierlich wässrigen Phase bildet. Die Sinterglasschicht ist weiterhin vorzugsweise 1-2 mm dick. Schließlich besteht die Sinterglasschicht vorzugsweise aus Borsilikatglas 3.3.

Die Tropfengröße des Speisefettes wird durch die Wandschubspannung bestimmt, die direkt proportional zur Rotationsgeschwindigkeit (Drehzahl) des Membrankörpers und zur Viskosität der kontinuierlichen wässrigen Phase ist. Eine hohe Wandschubspannung ermöglicht eine frühe Tropfenablösung und damit die Bildung kleinerer Fetttröpfchenteilchen.

Eine steigende Viskosität der kontinuierlichen wässrigen Phase erhöht die Wandschubspannung, wodurch die Tropfen eher abgelöst werden. Weiterhin wird bei einer steigenden Viskosität zugleich dem Tropfenwachstum zunehmend Widerstand entgegengesetzt. Beide Faktoren führen zur einer Verringerung der Tropfengröße.

Kleine Tröpfchen werden bei geringem Druck, hoher Viskosität der kontinuierlichen wässrigen Phase und hoher Umfangsgeschwindigkeit des Membrankörpers erreicht.

Die Tropfengröße der Speisefette wird weiterhin bestimmt durch die Porengröße der verwendeten äußeren, mit der wässrigen Phase in Kontakt befindlichen Membranschicht. Im allgemeinen ist die Tropfengröße 5 bis 10 mal höher als die äußeren Mikroporen der Membranschicht.

Die Speisefetttröpfchen agglomerieren aufgrund der mechanischen Beanspruchung in den folgenden Herstellungsschritten und insbesondere beim Abkühlen und Aufschäumen gemäß Schritt e) des Herstellungsverfahrens. Hierbei beeinflusst die Tröpfchengröße der Speisefette die Größe der gebildeten Speisefettagglomerate. Je kleiner die Tröpfchengröße, desto kleiner die Agglomerate bzw. der D50,3-Wert und umgekehrt bei ansonsten gleichen Herstellbedingungen.

Bei dem oben beschriebenen Herstellungsverfahren für die erfindungsgemäße Süßware ist es ebenfalls möglich, in die aus Schritt a) erhaltene Mischung sofort die Fettphase gemäß Schritt c) einzudispergieren und im Anschluss durch Eindampfen (Schritt b)) den gewünschten Trockensubstanzgehalt einzustellen.

Der nachfolgende Pasteurisationsschritt d) für die Süßware erfolgt bei einer Temperatur von nicht mehr als 80˚C. Üblicherweise beträgt die Pasteurisationstemperatur 70 bis 80˚C, und der Pasteurisationsvorgang dauert 1 bis 4 Minuten. Um keinen Verlust der Gesamtwassermenge im Endprodukt zu erhalten, muss beim Pasteurisieren darauf geachtet werden, dass kein Wasserverlust durch Verdunsten bzw. Wasserentzug erzielt wird. Deshalb empfiehlt es sich, einen ausreichenden hydrostatischen Druck einzusetzen.

Nach der Pasteurisationsphase wird die Süßware im Schritt e) abgekühlt, z.B. unter Verwendung einer an den Ausgang des Pasteurisierapparates angeschlossenen Kühlanlage.

Während des Abkühlens kann die Süßware ggf. mit einer geringen Menge an kleinen Laktosekeimkristallen geimpft werden, an denen die gelöste Laktose anschließend kristallisieren kann, ohne eine sensorische Sandigkeit auszubilden. Es ist möglich, eine Suspension aus Keimkristallen und einer Flüssigkeit herzustellen und diese fortlaufend zu der Süßware zuzudosieren.

Anschließend wird die Süßware weiter abgekühlt, z.B. mittels einer oder mehrerer Kühlanlage(n). In dieser Phase wird die Süßware aufgeschäumt, indem man üblicherweise mittels eines Injektors oder mittels einer rotierenden, mikroporösen Membran einen dosierten Zufluss von Gas, vorzugsweise Inertgas (z.B. Stickstoff), in die Süßware injiziert bzw. einbläst. Weiterhin kommt es zum Auskristallisieren wenigstens eines Teils des Speisefettes.

Bei nicht gefrorenen Süßwaren beträgt z.B. die Temperatur des ersten Kühlschritts 60 - 30˚C, wonach die Impfung mit Laktosekeimkristallen erfolgt, und im Anschluss hieran die Süßware in einem nachfolgenden Kühlschritt auf z.B. 20 - 10˚C abgekühlt wird, bevor das Aufschäumen und Auskristallisieren des Speisefettes erfolgt.

Bei der Herstellung gefrorener Süßwaren, wie z.B. Speiseeis, wird die aus dem Schritt d) resultierende, pasteurisierte Mischung auf unter Gefriertemperatur z.B. mittels eines Röhrenwärmetauschers abgekühlt und einer Kühllagerung, z.B. während 24 Stunden in einem Reifungstank, unterzogen. Anschließend wird die gekühlte Mischung in einem Freezer weiter abgekühlt und mit Gas beaufschlagt. Daraufhin erfolgt zur Strukturstabilisierung eine Härtung in einem Kühlschrank bei vorzugsweise -30 bis -45˚C bis eine Produktkerntemperatur von - 25˚C erreicht ist.

Die aus dem erfindungsgemäßen Verfahren resultierende, geschäumte Süßware kann als solche in luftdicht verschließbare Behälter aseptisch abgefüllt und verkauft werden.

Weiterhin bietet es sich an, die erfindungsgemäße Süßware direkt als Bestandteil eines verzehrbaren Produktes, wie z.B. als Füllung bei der Herstellung einer Backware, z.B. einer Milchcreme-Schnitte, zu verwenden, bei der die Süßware auf eine Gebäckschicht oder sandwichartig zwischen zwei oder mehreren Gebäckschichten aufgetragen wird, oder als Füllung in einer gerollten Backware dient.

Die erfindungsgemäße Süßware kann auch zum Auftragen auf oder in eine Konditoreiware verwendet werden. Weiterhin kann die erfindungsgemäße Süßware als Füllung, als Teil einer Füllung oder als Dekor von gefüllten Schokoladenprodukten oder von Zuckerwaren dienen. Hierbei kann die Süßware auch mit Früchten (Fruchtfüllung) vermengt werden.

Schließlich bietet sich auch die Möglichkeit, die erfindungsgemäße Süßware als Dessert, als Bestandteil von Desserts oder als Brotaufstrich zu verwenden.

Die Erfindung betrifft schließlich die Verwendung einer Dispergiervorrichtung zur Herstellung der erfindungsgemäßen Süßware.

Diese Dispergiervorrichtung umfasst ein temperierbares, zylinderförmiges Gefäß und eine in der Mitte des Gefäßes angebrachten, rotierbaren, mikroporösen Membranhohlzylinder (Rohr) mit einer äußeren Membranschicht mit Poren < 1 $\mu$m.

Vorzugsweise besteht der mikroporöse Membranhohlzylinder aus einem inneren Glassinterstützrohr mit Poren von 5 bis 25 $\mu$m und einer äußeren Sinterglasschicht mit einer Dicke von 1 bis 2 mm und einer Porengröße von < 1 $\mu$m. Insbesondere bevorzugt ist eine mittlere Porengröße der Sinterglasschicht von 0,4 bis 0,8 $\mu$m, und speziell bevorzugt von 0,7 bis 0,8 $\mu$m. Gemäß einer weiteren bevorzugten Ausführungsform besteht die äußere Sinterglasschicht aus mehreren gesinterten Glasschichten unterschiedlicher Porengröße, wobei die Schicht mit der geringsten durchschnittlichen Porengröße die äußerste Schicht bildet. Insbesondere ist es auch bevorzugt, dass die Sinterglasschicht(en) aus Borsilikatglas 3.3 besteht bzw. bestehen.

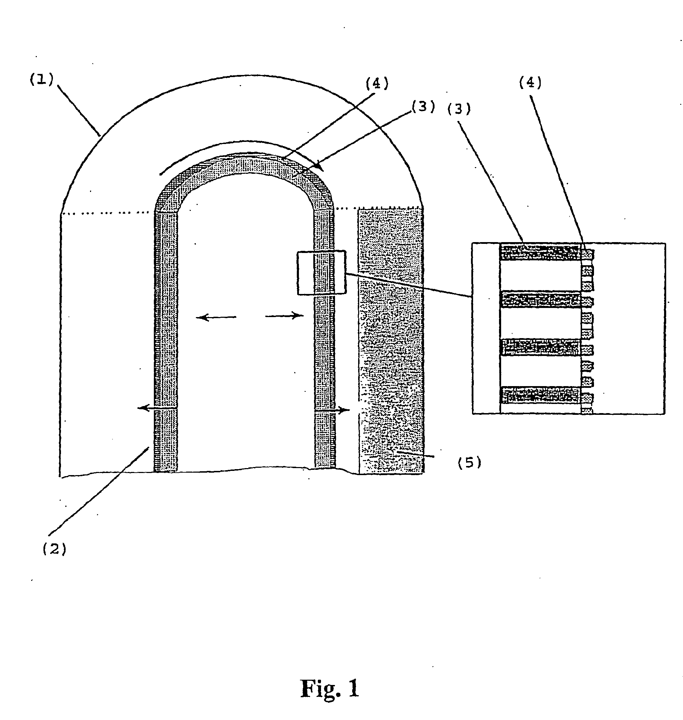

Eine bevorzugt eingesetzte Dispergiervorrichtung ist im folgenden im Hinblick auf die Figur 1 näher beschrieben.

Figur 1: Dispergiervorrichtung zur Herstellung der erfindungsgemäßen Süßware

Die Dispergiervorrichtung besteht aus einem temperierbaren, zylinderförmigen Gefäß (1). Die Förderung der sich bildenden Dispersion erfolgt vorzugsweise mit Hilfe einer Exzentnerschneckenpumpe. In der Mitte des Gefäßes befindet sich eine Hohlwelle, die ein Glassinterrohr (2) antreibt und über die der Zufluss des flüssigen Speisefettes erfolgt. Das Glassinterrohr (2) besteht aus einem mikroporösen Glassinterstützkörper (3) aus gesintertem Glas mit einer mittleren Porengröße von 5 bis 25 $\mu$m. Auf diesem Stützkörper (3) befindet sich eine. Sinterglasschicht (4) mit einer durchschnittlichen Porengröße von < 1 $\mu$m. An der Hohlwelle ist über zwei Flächendichtungen das Glassinterrohr (2) so befestigt, dass der Stofftransport nur durch das Kapillarsystem des Glassinterkörpers erfolgen kann. Durch die kraftschlüssige Verbindung mit der Welle wird das Glassinterrohr (2) in Rotationsbewegung versetzt. Die Drehzahl der Welle und damit die Umfangsgeschwindigkeit des Glassinterrohrs (2) sind einstellbar. Im Raum zwischen der Innenwand des temperierbaren zylinderförmigen Gefäßes (1) und der äußeren Mantelfläche des Glassinterrohres (2) sind vorzugsweise Vertikalstromstörer (5) in Form von Blechen angebracht. Im Betriebszustand ist der Raum zwischen der Innenwand des zylinderförmigen Gefäßes (1) und der äußeren Mantelfläche des Glassinterrohrs (2) vollständig mit der wässrigen Phase und das innere Volumen des Glassinterrohrs (2) vollständig mit flüssigem Speisefett gefüllt.

Im folgenden wird die Erfindung anhand zweier Beispiele näher erläutert.

Beispiel 1a): Milchcreme

Um 100 kg Milchcreme (Süßware) zu erhalten, werden aus einer Mischung aus 190,1 kg pasteurisierter frischer Vollmilch (Wassergehalt 87,5%, Milchtrockenmasse 12,5% und fettfreie Milchtrockenmasse 9% gemäß den Nährwerttabellen für Milch und Milchprodukte gemäß E. Renner, 1992), 18,2 kg Saccharose, 7,5 kg Honig und 0,05 kg Vanillin mittels Eindampfen bei 48 bis 55°C insgesamt 142,6 kg Wasser entzogen, damit der Trockensubstanzgehalt der konzentrierten Mischung bei 65,74% liegt.

In die erhaltene wässrige konzentrierte Mischung (14,65 kg) werden 5,186 kg Palmöl bei 55°C mit Hilfe einer Dispergierzelle eingemischt. Die Dispergierapparatur entspricht der in Fig. 1 dargestellten Vorrichtung und besteht aus einem temperierbaren, zylinderförmigen Gefäß (1) mit einer Höhe von 365 mm und einem Durchmesser von 210 mm, das über einen Zu- und Ablauf kontinuierlich betrieben wird und mit einem Ausgleichsgefäß verbunden ist, wobei die sich bildende Mischung mit einer Exzenterschneckenpumpe im Kreislauf gepumpt wird. Das Sinterrohr (2) besteht aus einem Stützkörper (3) aus gesintertem Borsilikatglas 3.3 mit einer Dicke von 15 mm. Auf diesem Stützkörper befindet sich eine Sinterglasschicht (4) aus Borsilikatglas 3.3 mit einer durchschnittlichen Porengröße von 12,5 $\mu$m und einer Dicke von 1,5 mm. Die Umfangsgeschwindigkeit des Glassinterrohrs (2) wurde auf 5,3 m/s eingestellt. Das im Inneren des Glassinterrohrs (2) befindliche flüssige Speisefett wird mit einem statischen Druck von 1,0 bar beaufschlagt. Die Dispergiertemperatur wird auf 55°C eingestellt.

Nach dem Herstellen der Rohcreme mittels Dispergieren durchläuft diese im Anschluss einen Pasteurisierapparat (Schabewärmetauscher) mit einer Temperatur von 70°C während 3,5 Minuten.

Die pasteurisierte Creme gelangt anschließend in eine erste Kühlanlage (Kratzkühler), in der die Creme für 3,5 Minuten bei 44°C verweilt. Darauffolgend wird eine Dispersion aus Laktosemikrokristallen (0,001 kg) und Palmöl (0,12 kg) kontinuierlich mittels einer Dosierpumpe zugegeben.

Die Creme fließt in eine zweite Kühlanlage (Kratzkühler), in der sie für 3,5 Minuten bei 18°C verweilt. Während dieser Verweilzeit wird die Creme mittels eines Injektors mit Stickstoff aufgeschäumt, so dass die Dichte der aufgeschäumten Creme bei dieser Herstellungsstufe im Bereich von 0,5 bis 0,6 g/cm3 liegt. Die Stundenleistung der Anlage beträgt ca. 26 kg Creme. Nach der zweiten Kühlanlage erfolgt die Abfüllung der kalten Creme in ein luftdicht verschließbares Gefäß oder das Plazieren zwischen zwei Gebäckschichten.

Die analytisch bestimmte Zusammensetzung der oben erhaltenen Creme, ihre physikalischen und organoleptischen Eigenschaften sind in der nachfolgenden Tabelle 1 wiedergegeben.

Beispiel 1b): Joghurtcreme

Zu pasteurisierter frischer Vollmilch wird bei 42°C eine Reifungskultur (Mischung aus Streptococcus termophilus und Lactobacillus bulgaricus) eingemischt und bis zu einem pH-Wert von 4,5 bebrütet (Dauer 2,5-3 Stunden), wodurch ein frischer Joghurt erhalten wird, der analog dem Beispiel 1a) anstelle der frischen Vollmilch in gleicher Menge eingesetzt und weiter verarbeitet wird.

Die analytisch bestimmte Zusammensetzung und die Eigenschaften der so erhaltenen Joghurtcreme sind in der nachfolgenden Tabelle 1 angegeben.

Beispiel 1c): Sauermilchcreme

Zu pasteurisierter frischer Vollmilch wird bei 25°C eine mesophile Kultur (Mischung aus Streptococcus cremoris und Streptococcus lactis) eingemischt und bebrütet bis zu einem pH-Wert von 4,5-4,6 (12 bis 15 Stunden), um eine frische Sauermilch herzustellen, die analog Beispiel 1a) anstelle der frischen Vollmilch in gleicher Menge eingesetzt und weiterverarbeitet wird.

Die analytisch bestimmte Zusammensetzung und die Eigenschaften dieser Sauermilchcreme sind in der nachfolgenden Tabelle 1 aufgelistet.

Tabelle 1

| Inhaltsstoffe | Patent-beispiel 1a) Milchcreme | Patent-beispiel 1b) Joghurtcreme | Patent-beispiel 1c) Sauer-Milchcreme |
|---|---|---|---|
| Milcheiweißgehalt (%) | 6,54 | 5,75 | 5,79 |
| Zuckergehalt (%) | 30,58 | 27,56 | 28,72 |

(fortgesetzt)

| Inhaltsstoffe | Patent-beispiel 1a)<br>Milchcreme | Patent-beispiel 1b)<br>Joghurtcreme | Patent-beispiel 1c)<br>Sauer-Milchcreme |
|---|---|---|---|
| Speisefettgehalt (%) | 32,24 | 33,86 | 33,17 |
| Milchfett (%) | 5,6 | 5,1 | 5,5 |
| Mineralsalze (%) | 1,23 | 1,17 | 1,22 |
| Mineralsalz Calcium (%) | 0,209 | 0,189 | 0,188 |
| Milchsäure (%) | 0,02 | 1,19 | 1,12 |
| Wassergehalt (%) | 27,68 | 30,91 | 30,41 |
| pH-Wert | 6,8 | 4,45+0,01 | 4,41+0,01 |
| aw-Wert (20˚C) | 0,90 | 0,90 | 0,90 |
| Gesamtmilchtrockenmasse (%) | 23,17 | 19,99* | 20,80** |
| Fettfreie Milchtrockenmasse (%) | 17,57 | 14,89* | 15,30** |
| Denaturierungsgrad der Molkenproteine(%) | nicht nachweisbar | nicht nachweisbar | nicht nachweisbar |
| Vitamin A (mg/100g) | 0,051 | 0,047 | 0,051 |
| Vitamin B1 (mg/100g) | 0,13 | 0,11 | 0,11 |
| Vitamin B2 (mg/100g) | 0,37 | 0,32 | 0,31 |
| Vitamin B6 (mg/100g) | 0,072 | 0,081 | 0,089 |
| Vitamin B12 ($\mu$g/100g) | 0,50 | 0,20 | 0,20 |
| Vitamin D3 ($\mu$g/100g) | 0,59 | 0,48 | 0,48 |
| Vitamin E (mg/100g) | 0,31 | 0,31 | 0,34 |
| Vitamin K1 ($\mu$g/100g) | <1 | <1 | 1,1 |
| Biotin ($\mu$g/100) | 2,8 | 1,5 | 2,7 |
| Folsäure ($\mu$g/100g) | <8 | <8 | <8 |
| Niacin mg/100g) | 0,13 | 0,19 | 0,21 |
| Pantothensäure/Vit B3 (mg/100g) | 0,60 | 0,52 | 0,55 |
| $\alpha$-Lactalbumin (%) | 1,56 | 1,50 | 0,112 |
| $\beta$-Lactoglobulin (%) | 5,72 | 5,43 | 4,342 |
| Partikelgröße D50,3 der Fettteilchenagglomera te ($\mu$m) | 6 | 11 | 11 |
| Partikelgröße D50, 3 der Laktosekristalle ($\mu$m) | 15 | 13 | 14 |
| Dichte (g/cm3) | 0,53+0,02 | 0,66+0,02 | 0,74+0,02 |
| Spezifische Grenzfläche (cm2/cm3) | 1672 | 874 | 727 |
| eff. Viskosität (20˚C), Schergefälle von 0,5s-1 | 835 | 523 | 422 |

(fortgesetzt)

| Inhaltsstoffe | Patent-beispiel 1a) Milchcreme | Patent-beispiel 1b) Joghurtcreme | Patent-beispiel 1c) Sauer-Milchcreme |
|---|---|---|---|
| eff. Viskosität (20˚C), Schergefälle von 50s-1 | 2,1 | 1,99 | 4,88 |
| Haltbarkeit | > 9 Monate | > 9 Monate > | 9 Monate |
| Organoleptik | sehr milchig, weich, cremig, ganz besonders sahnig, Fett tritt praktisch nicht in Erscheinung | intensives reines Joghurtaroma , weich, cremig, ganz besonders sahnig, Fett tritt praktisch nicht in Erscheinung | intensives reines Sauermilch-aroma, weich, cremig, ganz besonders sahnig, Fett tritt praktisch nicht in Erscheinung |

* Gesamtjoghurt- bzw. fettfreie Joghurttrockenmasse inkl. Milchsäure
** Gesamtsauermilch- bzw. fettfreie Sauermilchtrockenmasse inkl. Milchsäure

Für die Bestimmung der Zusammensetzung der Creme wurden die folgenden analytischen Verfahren verwendet.

| | |
|---|---|
| Trockenmasse/Wasser | IDF 21B: 1987 (Seesand 102˚C) |
| Speisefett | IDF 126A: 1988 |
| | (Verfahren nach Weibull) |
| Milchfett | DGF C-V 9a |
| | (Bestimmung über Halbmikrobuttersäurezahl) |
| Protein (N x 6,38) | IDF 20B: 1993 |
| | (Verfahren nach Kjeldahl) |
| Lactose/Galactose | § 35 LMBG L 01.00-17; enzymatisch,Boehringer-Test-Kit |

Saccharose/Glucose/ Fructose    enzymatisch,Boehringer-Test-Kit VDLUFA VI C 10.2 (550˚C) gravimetrisch
Asche
Calcium

Denaturierungsgrad    SDS-PAGE-Elektrophorese: Als Maß für die Denaturierung der in der Creme vorliegenden Molkenproteine wurde der Denaturierungsgrad von β-Lactoglobulin elektrophoretisch bestimmt. Der Denaturierungsgrad, angegeben in %, gibt den Anteil an nativem β-Lactoglobulin zu Gesamt-β-Lactoglobulin (nach Totalreduktion) an und wird aus dem Verhältnis der Peakflächen zueinander berechnet.

Die zu untersuchende Probe wird mit Natriumdodecylsulfat (SDS) vorbehandelt, um die Milchproteine aufzufalten. Mit der anschließenden Total-reduktion der aufgefalteten Proteinmoleküle mittels Dithiotreitol (DTT) erhält man die monomere, reduzierte Form des gesamten β-Lactoglobulins. In einem Parallelansatz wird die Probe lediglich mit SDS behandelt, um den nativen, nicht reduzierten Anteil des Lactoglobulins bestimmen zu können. Je geringer der native Anteil an β-Lactoglobulin, desto höher der Grad der

Denaturierung.
Die Auftrennung der einzelnen Milchproteine erfolgt mittels Porengradientengelelektrophorese nach Molekülgröße. Die fixierten und gefärbten Proteine werden nach densitometrischer Messung quantitativ ausgewertet.
Der Denaturierungsgrad, bezogen auf β-Lactoglobulin, angegeben in %, wird nach folgender Formel berechnet:

(fortgesetzt)

$$D = 1 - \frac{PF\text{ß-Lactoglobulin nativ} \times 100}{PF\text{ß-Lactoglobulin reduziert}}$$

D in %

PF: Peakfläche β-Lactoglobulin-Bande im nativen bzw. reduzierten Zustand.

| | |
|---|---|
| Vitamin B1 | fluorimetisch |
| Vitamin B2 | HPLC |
| Vitamin B6 | HPLC |
| Vitamin B12 | turbidimetrisch nach USP XXIII, 1995, M.171 |
| Vitamin K1 | HPLC |
| Vitamin D3 | § 35 LMBG L 49.00-1; HPLC |
| Vitamin A | § 35 LMBG L 49.00-3; HPLC |
| Vitamin E | § 35 LMBG L 49.00-3; HPLC |
| Niacin | turbidimetrisch nach USP XXIII, 1995, M.441 |
| Folsäure | mikrobiologisch |

| | |
|---|---|
| Pantothensäure/Vitamin B3 | turbidimetrisch nach USP XXIII, 1995, M.91 |
| Biotin | turbidimetrisch nach USP XXI, 3.SUPPL. 1986, M.88 |
| α-Lactalbumin | IDF 178:1996 (HPLC) |
| β-Lactoglobulin | IDF 178:1996 (HPLC) |

Die effektiven Viskositäten wurden mit einem schergeschwindigkeitsgesteuerten Rotationsrheometer als Messgerät bestimmt. Das Meßsystem bestand aus einer Anordnung Platte/Platte (Stahlausführung) mit einem Durchmesser der oberen Platte von 20 mm und einem Plattenspalt von 1 mm. Die Relaxationszeit vor dem Messbeginn betrug 120 Sekunden, und die Messungen wurden doppelt in einem Messbereich von 0,1 bis 100 s-1 in 10 min durchgeführt.

Die Teilchengröße D50,3 der Zuckerkristalle und der Fettteilchenagglomerate wurde mittels Laserbeugungsspektroskopie analysiert. Die Messungen wurden gemäß ISO 13320-1 durchgeführt. Das erhaltene Beugungsmuster wurde mittels des Mie-Modells in eine Teilchengrößenverteilung umgerechnet. Im speziellen Fall wurde zur Charakterisierung der Teilchengrößen das Laserbeugungsspektrometer Malvern Mastersizer X eingesetzt.

Der Parameter D50,3 ist wie folgt definiert: 50 % des Teilchenvolumens werden von Teilchen eingenommen, die kleiner sind als der angegebene Teilchendurchmesser.

Die Kristallinität des Fettes wurde mit einem Disc-Gerät in einem Temperaturbereich von 0 bis 60˚C und mit einer Heizrate von 2 K/min ermittelt. Hierbei konnten sowohl kristalline als auch flüssige Anteile an Fett festgestellt werden.

Die geschäumte Struktur der Creme wurde mit Hilfe eines Rasterelektronenmikroskops (REM) ermittelt, wobei die untersuchte Probe in unterkühltem flüssigen Stickstoff eingefroren wurde, anschließend gebrochen und mit Gold oder Platin in einer Kryo-Präparationsanlage beschichtet wurde und anschließend in das Elektronenmikroskop eingeschleust wurde. Die elektronenmikroskopischen Aufnahmen zeigen die Feinporigkeit des Schaumes, die durch die spezifische Grenzfläche quantifiziert wird. Mit Hilfe der REM-Bilder wurde durch Bildanalyse/Stereologie die spezifische Grenzfläche bestimmt. REM-Bilder der Schaumstruktur mit einer 350-fachen Vergrößerung dienten hierbei als Bildvorlagen. Die Konturen der Gasblasen wurden markiert (vollständige Erfassung der Blasen pro Bild; mindestens 800 Blasen pro Messung), das Bild wurde gescannt und anschließend ein Binärbild (Blasen und Untergrund) erzeugt. Bei der Bildauswertung wurde die Anzahl der Phasenübergänge zwischen Untergrund und Blasen entlang einer Schar paralleler Linien erfasst. Die spezifische Grenzfläche errechnete sich aus der Anzahl der Phasenübergänge pro Gesamtlinienlänge.

Die lange Haltbarkeit der Creme ergibt sich aus den mikrobiologischen Daten, die nach einer Kühllagerung von 9 Monaten nach der Herstellung ermittelt worden sind. Die über das Plattengussverfahren ermittelten Keimzahlen (§ 35 LMBG L 01.00-5), Hefen (§ 35 LMBG L 01.00-37), Schimmelpilze (§ 35 LMBG L 01.00-37) und Enterobakterien (VDLUFA VI M 7.4.2) waren so gering, dass keine mikrobiologische Beanstandung gegeben ist.

Die effektiven Viskositätswerte bei einem Schergefälle von 0.5s-1 und bei 20˚C zeigen, dass die Cremes der Beispiele 1a)-1c) weich ist. Weiterhin zeigen die mit steigendem Schergefälle abnehmenden effektiven Viskositäten auch den cremigen Charakter der hergestellten Cremes. Da die Cremes unter dem Einfluss der Schwerkraft nicht fließen, sind sie auch formstabil.

Da 95% der Zuckerkristalle kleiner als 12 $\mu$m sind, tritt bei den Cremes keine sensorisch wahrnehmbare Sandigkeit auf.

Beispiel 2): Milcheiscreme

Für die Herstellung von Frischmilcheiscreme werden 190,1 kg pasteurisierte frische Vollmilch (Wassergehalt 87,5 %, Milchtrockenmasse 12,5 %, fettfreie Milchtrockenmasse 9 %), 18,2 kg Saccharose, 7,5 kg Honig und 0,05 kg Vanillin vermischt. Dieser Mischung wird schonend bei 48 bis 55˚C 109,2 kg Wasser entzogen, so dass der Trockensubstanzgehalt der Mischung bei 45,5 % liegt.

Der konzentrierten wässrigen Phase (106,6 kg) wird mittels Dispergierzelle 25,9 kg Palmöl bei 55˚C zugegeben.

Die erhaltene Rohcreme wird anschließend in einem Schabewärmetauscher bei einer Temperatur von 70˚C während 3,5 Minuten pasteurisiert.

Die pasteurisierte Creme wird anschließend mittels Röhrenwärmetauscher auf 7˚C abgekühlt und gelangt in einen Reifungstank, wobei bei 7˚C eine Kühllagerung über 24 Stunden erfolgt.

Anschließend wird die gereifte Creme kontinuierlich in einen Freezer gefördert und mit einem Durchsatz von 30 kg/h bei einem Systemdruck von 2,05 bar und einer Drehzahl der Messerwelle von 400 Minuten-1 bearbeitet und mit Stickstoff bis zu einem Aufschlag von 80 % aufgeschäumt. Beim Abfüllen weist die so erzeugte Eiscreme eine Ziehtemperatur von -9,2˚C auf.

Zur Strukturstabilisierung der Eiscreme erfolgt ein Härtungsschritt, der in einem Kühlkanal bei -30 bis -45˚C bis zum Erreichen einer maximalen Produktkerntemperatur von -25˚C erfolgt.

Die analytisch bestimmte Zusammensetzung der oben erhaltenen Eiscreme, ihre physikalischen und organoleptischen Eigenschaften sind in der nachfolgenden Tabelle 2 wiedergegeben.

Tabelle 2

| Inhaltsstoffe | Patentbeispiel 2 des Speiseeises |
|---|---|
| Milcheiweißgehalt (%) | 6, 1 |
| Zuckergehalt (%) | 24,48 |
| Speisefettgehalt (%) | 25,91 |
| Milchfett (%) | 4,7 |
| Mineralsalze (%) | 1,04 |
| Mineralsalz Calcium (%) | 0,171 |
| Milchsäure (%) | 0,03 |
| Wassergehalt (%) | 42,28 |
| pH-Wert | * |
| aw-Wert (20˚C) | * |
| Gesamtmilchtrockenmasse (%) | 18,95 |
| Fettfreie Milchtrockenmasse (%) | 14,25 |
| Denaturierungsgrad der Molkenproteine(%) | nicht nachweisbar |
| Vitamin A (mg/100g) | 0,026 |
| Vitamin B1 (mg/100g) | 0,031 |
| Vitamin B2 (mg/100g) | 0,29 |
| Vitamin B6 (mg/100g) | 0,124 |
| Vitamin B12 ($\mu$g/100g) | < 0,1 |
| Vitamin D3 ($\mu$g/100g) | n.n. |
| Vitamin E (mg/100g) | 0,23 |
| Vitamin K1 ($\mu$g/100g) | < 1 |

(fortgesetzt)

| Inhaltsstoffe | Patentbeispiel 2 des Speiseeises |
|---|---|
| Biotin ($\mu$g/100) | 4,30 |
| Folsäure ($\mu$g/100g) | < 8 |
| Niacin mg/100g) | 0,15 |
| Pantothensäure/Vit B3 (mg/100g) | 0,46 |
| $\alpha$-Lactalbumin (%) | 1,200 |
| $\beta$-Lactoglobulin (%) | 4,730 |
| Eiskristalldurchmesser (D50,0 $\mu$m) | 30 |
| Dichte (g/cm3) | 0,5314 + 0,021 |
| Fettagglomeratdurchmesser (D50, 3 $\mu$m) | 14 |
| Spezifische Grenzfläche (cm$^2$/cm$^3$) | * |
| eff. Viskosität (20-C), Schergefälle von 0,5s-1 | * |
| eff. Viskosität (20˚C), Schergefälle von 50s-1 | * |
| Organoleptik | sehr milchig, cremig, ganz besonders sahnig, Fett tritt praktisch nicht in Erscheinung |
| * diese Parameter sind für die Eiscreme-Charakterisierung irrelevant | |

**Patentansprüche**

1. Lang haltbare Süßware in Form einer weichen, cremigen, formstabilen und aufgeschäumten Masse, die umfasst

- Milchbestandteile, wobei die Süßware einen Milcheiweißgehalt von 5,5 bis 20 Gew.%, bezogen auf das Gesamtgewicht der Süßware, eine fettfreie Milchtrockenmasse von 14 bis 55 Gew.%, bezogen auf das Gesamtgewicht der Süßware, und einen Denaturierungsgrad der Molkenproteine von $\leq$ 10% aufweist,
- Speisefette, wobei wenigstens ein Teil des Speisefettes bei Raumtemperatur in kristallisierter Form enthalten ist,
- Zucker und/oder Zuckerersatzstoffe, wobei die Süßware keine vom Konsumenten wahrnehmbaren Laktosekristalle enthält, und
- Wasser,

**gekennzeichnet durch** Speisefettagglomerate in kristallisierter bzw. nicht-kristallisierter Form, mit einer volumenbezogenen Teilchengröße D50,3 von 3,5 bis 18 $\mu$m.

2. Süßware nach Anspruch 1, **gekennzeichnet durch** einen Speisefettgehalt von 15 bis 50 Gew.%, bezogen auf das Gesamtgewicht der Süßware.

3. Süßware nach Anspruch 1 oder 2,
**gekennzeichnet durch** einen Gehalt an Zucker und/oder Zuckerersatzstoffen von 8 bis 45 Gew.%, bezogen auf das Gesamtgewicht der Süßware.

4. Süßware nach einem oder mehreren der vorhergehenden Ansprüche, **gekennzeichnet durch** einen Wassergehalt von 13 bis 45 Gew.%, bezogen auf das Gesamtgewicht der Süßware.

5. Süßware nach einem oder mehreren der vorhergehenden Ansprüche, **gekennzeichnet durch** einen Milcheiweißgehalt von 5,5 bis 14 Gew.%, bezogen auf das Gesamtgewicht der Süßware.

6. Süßware nach einem oder mehreren der vorhergehenden Ansprüche, **gekennzeichnet durch** eine fettfreie MilchtrockenMasse von 14 bis 37 Gew.%, bezogen auf das Gesamtgewicht der Süßware.

**7.** Süßware nach einem oder mehreren der vorhergehenden Ansprüche, **gekennzeichnet durch** einen Denaturierungsgrad von 0%.

**8.** Süßware nach einem oder mehreren der vorhergehenden Ansprüche, **gekennzeichnet durch** eine Teilchengröße D50,3 der Speisefettagglomerate von 4,0 bis 16 $\mu$m, insbesondere 4,5 bis 14 $\mu$m.

**9.** Verfahren zur Herstellung einer Süßware gemäß einem der Ansprüche 1 bis 8, **gekennzeichnet durch** die folgenden Herstellungsschritte:

a) Vermischen von pasteurisierter frischer Vollmilch, saurer Vollmilch oder Vollmilchjoghurt und/oder pasteurisierter frischer teilentrahmter Milch, saurer teilentrahmter Milch oder teilentrahmtem Joghurt und/oder pasteurisierter frischer Magermilch saurer Magermilch oder Magermilchjoghurt mit Zucker und/oder Zuckerersatzstoffen und gegebenenfalls weiteren Zutaten;
b) Einstellen der im Schritt a) erhaltenen Mischung **durch** schonendes Eindampfen bei einer Temperatur von $\leq$ 60°C und bei einem Druck von < 1 bar oder Gefriertrocknen auf den gewünschten Trockensubstanzgehalt;
c) Eindispergieren einer Speisefette und gegebenenfalls Emulgatoren umfassenden Fettphase in die im Schritt b) erhaltene, konzentrierte wässrige Mischung über einen rotierende mikroporösen Membranhohlzylinder, dessen Außenfläche der wässrigen Phase und die Innenfläche der Fettphase zugewandt ist, wobei die der wässrigen Phase zugewandte Fläche eine äußere Membranschicht mit Poren < 1 $\mu$m aufweist.
d) Pasteurisieren der im Schritt c) erhaltenen Süßware bei Temperaturen von maximal 80°C; und
e) Abkühlen der Süßware, ggf. Einmischen von Laktosemikrokristallen, Aufschäumen der Süßware **durch** Einblasen von Gas und Auskristallisieren wenigstens eines Teils des Speisefettes der Süßware.

**10.** Verfahren zur Herstellung einer Süßware gemäß einem der Ansprüche 1 bis 8, **gekennzeichnet durch** die folgenden Herstellungsschritte:

a) Vermischen von pasteurisierter frischer Vollmilch, saurer Vollmilch oder Vollmilchjoghurt und/oder pasteurisierter frischer teilentrahmter Milch, saurer teilentrahmter Milch oder teilentrahmten Joghurt und/oder pasteurisierter frischer agermilch, saurer Magermilch oder MagermilchJoghurt mit Zucker und/oder Zuckerersatzstoffen sowie gegebenenfalls weiteren Zutaten;
b) Eindispergieren einer Speisefette und gegebenenfalls Emulgatoren umfassenden Fettphase in die im Schritt a) erhaltene, konzentrierte wässrige Mischung über einen rotierenden mikroporösen Membranhohlzylinder, dessen Außenfläche der wässrigen Phase und die Innenfläche der. Fettphase zugewandt ist, wobei die der wässrigen Phase zugewandte Fläche eine äußere Membranschicht mit Poren < 1 $\mu$m aufweist.
c) Einstellen der im Schritt b) erhaltenen Mischung **durch** schonendes Eindampfen bei einer Temperatur von $\leq$ 60°C und einem Druck von < 1 bar oder Gefriertrocknen auf den gewünschten Trockensubstanzgehalt;
d) Pasteurisieren der im Schritt c) erhaltenen Süßware bei Temperaturen von maximal 80°C; und
e) Abkühlen der Süßware, ggf. Einmischen von Laktosemikrokristallen, Aufschäumen der Süßware **durch** Einblasen von Gas und Auskristallisieren wenigstens eines Teils des Speisefettes der Süßware.

**11.** Verfahren nach Anspruch 9 oder 10, **dadurch gekennzeichnet, dass** beim Eindispergieren der Speisefette ein Druck von 0 bis 5 bar angelegt wird, und eine Temperatur von < 60°C angewandt wird.

**12.** Verfahren nach einem der Ansprüche 9 bis 11, **dadurch gekennzeichnet, dass** die Umfangsgeschwindigkeit des rotierenden mikroporösen Membranhohlzylinders auf 0,35 bis 35 m/s eingestellt wird.

**13.** Verfahren nach Anspruch 12, **dadurch gekennzeichnet, dass** der mikroporöse Membranhohlzylinder ein mikroporöses Glassinterrohr ist.

**14.** Verfahren nach Anspruch 13, **dadurch gekennzeichnet, dass** das mikroporöse Glassinterrohr aus einem inneren Glassinterstützrohr mit Poren von 5 bis 25 $\mu$m und einer äußeren Sinterglasschicht mit einer Dicke von 1 bis 2 mm und einer Porengröße von < 1 $\mu$m besteht.

**15.** Verfahren nach Anspruch 14 , **dadurch gekennzeichnet, dass** die mittlere Porengröße der Sinterglasschicht 0,4 bis 0,8 $\mu$m ist.

**16.** Verfahren nach Anspruch 14 oder 15, **dadurch gekennzeichnet, dass** die äußere Sinterglasschicht aus mehreren gesinterten Glasschichten unterschiedlicher Porengröße besteht, wobei die Schicht mit der geringsten durchschnittlichen Porengröße die Grenzfläche zu der kontinuierlichen wässrigen Phase bildet.

**17.** Verfahren nach einem oder mehrere der Ansprüche 14 bis 16, **<u>dadurch gekennzeichnet, dass</u>** die Sinter-glasschicht(en) aus Borsilikatglas 3.3 besteht bzw. bestehen.

**18.** Verwendung einer Dispergiervorrichtung, umfassend ein temperierbares, zylinderförmiges Gefäß und einen in der Mitte des Gefäßes angebrachten, rotierbaren, mikroporösen Membranhohlzylinder (Rohr) mit einer äußeren Membranschicht mit Poren < 1 $\mu$m, ur Herstellung einer Süßware nach einem der Ansprüche 1-8.

**19.** Verwendung nach Anspruch 18 **<u>dadurch gekennzeichnet, dass</u>** der mikroporöse Membranholzzylinder aus einem inneren Glassinterstützrohr mit Poren von 5 bis 25 $\mu$m und einer äußeren Sinterglasschicht mit einer Dicke von 1 bis 2 mm und einer Porengröße von < 1 $\mu$m besteht.

**20.** Verwendung nach Anspruch 19, **<u>dadurch gekennzeichnet, dass</u>** die mittlere Porengröße der Sinterglasschicht 0,4 bis 0,8 $\mu$m ist.

**21.** Verwendung nach Anspruch 19 oder 20, **<u>dadurch gekennzeichnet, dass</u>** die äußere Sinterglasschicht aus mehreren gesinterten Glasschichten unterschiedlicher Porengröße besteht, wobei die Schicht mit der geringsten durchschnittlichen Porengröße die äußerste Schicht bildet.

**22.** Verwendung nach einem oder mehreren der Ansprüche 19 bis 21, **<u>dadurch gekennzeichnet, dass</u>** die Sinterglasschicht(en) aus Borsilikatglas 3.3 besteht bzw. bestehen.

**Claims**

**1.** Long storage life confection in the form of a soft, creamy, shape-retaining and foamed-up mass comprising

- milk constituents, wherein the confection has a milk protein content of 5.5 to 20 % by weight with respect to the total weight of the confection, fat-free milk solids of 14 to 55 % by weight with respect to the total weight of the confection and a degree of denaturation of the whey proteins of ≤ 10 %,
- edible fats, wherein at least a part of the edible fat is present in crystallised form at room temperature,
- sugar and/or sugar substitutes, wherein the confection contains no lactose crystals perceptible to the consumer, and
- water,

**characterised by** edible fat agglomerates in crystallised or noncrystallised form having a volume-related particle size D50.3 of 3.5 to 18 $\mu$m.

**2.** Confection according to claim 1, **characterised by** an edible fat content of 15 to 50 % by weight with respect to the total weight of the confection.

**3.** Confection according to claim 1 or 2, **characterised by** a sugar and/or sugar substitutes content of 8 to 45 % by weight with respect to the total weight of the confection.

**4.** Confection according to one or more of the preceding claims, **characterised by** a water content of 13 to 45 % bv weight with respect to the total weight of the confection.

**5.** Confection according to one or more of the preceding claims, **characterised by** a milk protein content of 5.5 to 14 % by weight with respect to the total weight of the confection.

**6.** Confection according to one or more of the preceding claims, **characterised by** fat-free milk solids of 14 to 37 % by weight with respect to the total weight of the confection.

**7.** Confection according to one or more of the preceding claims, **characterised by** a degree of denaturation of 0 %.

**8.** Confection according to one or more of the preceding claims, **characterised by** a particle size D50.3 of the edible fat agglomerates of 4.0 to 16 $\mu$m, in particular 4.5 to 14 $\mu$m.

9. Method for producing a confection according to any of claims 1 to 8, **characterised by** the following production steps:

a) mixing of pasteurised fresh whole milk, sour whole milk or whole milk yoghurt and/or pasteurised fresh partly skimmed milk, sour partly skimmed milk or partly skimmed yoghurt and/or pasteurised fresh skimmed milk, sour skimmed milk or skimmed milk yoghurt with sugar and/or sugar substitutes and possibly other ingredients;
b) adjustment of the mixture obtained in step a) by mild concentration bv evaporation at a temperature of ≤ 60 ˚C and at a pressure of < 1 bar or freeze-drying to the desired dry matter content;
c) dispersal of a fat phase comprising edible fats and possibly emulsifiers into the concentrated aqueous mixture obtained in step b) via a rotating microporous hollow membrane cylinder whose outer surface is facing towards the aqueous phase and the inner surface towards the fat phase, wherein the surface facing towards the aqueous phase has an outer membrane layer with pores < 1 $\mu$m;
d) pasteurising the confection obtained in step c) at temperatures of at most 80 ˚C; and
e) cooling down the confection, possibly incorporation of lactose microcrystals, foaming the confection up by blowing gas in and crystallising out at least part of the edible fat of the confection.

10. Method for producing a confection according to any of claims 1 to 8, **characterised by** the following production steps:

a) mixing of pasteurised fresh whole milk, sour whole milk or whole milk yoghurt and/or pasteurised fresh partly skimmed milk, sour partly skimmed milk or partly skimmed yoghurt and/or pasteurised fresh skimmed milk, sour skimmed milk or skimmed milk yoghurt with sugar and/or sugar substitutes and possibly other ingredients;
b) dispersal of a fat phase comprising edible fats and possibly emulsifiers into the concentrated aqueous mixture obtained in step a) via a rotating microporous hollow membrane cylinder whose outer surface is facing towards the aqueous phase and the inner surface towards the fat phase, wherein the surface facing towards the aqueous phase has an outer membrane layer with pores < 1 $\mu$m;
c) adjustment of the mixture obtained in step b) by mild concentration by evaporation at a temperature of ≤ 60 ˚C and a pressure of < 1 bar or freeze-drying to the desired dry matter content;
d) pasteurising the confection obtained in step c) at temperatures of at most 80 ˚C; and
e) cooling down the confection, possibly incorporation of lactose microcrystals, foaming the confection up by blowing gas in and crystallising out at least part of the edible fat of the confection.

11. Method according to claim 9 or 10, **characterised in that** during dispersal of the edible fats a pressure of 0 to 5 bar is applied and a temperature of < 60 ˚C is used.

12. Method according to any of claims 9 to 11, **characterised in that** the circumferential speed of the rotating microporous hollow membrane cylinder is set to 0.35 to 35 m/s.

13. Method according to claim 12, **characterised in that** the microporous hollow membrane cylinder is a microporous sintered glass tube.

14. Method according to claim 13, **characterised in that** the microporous sintered glass tube consists of an inner sintered glass support tube having pores of 5 to 25 $\mu$m and an outer sintered glass layer having a thickness of 1 to 2 mm and a pore size of < 1 $\mu$m.

15. Method according to claim 14, **characterised in that** the mean pore size of the sintered glass layer is 0.4 to 0.8 $\mu$m.

16. Method according to claim 14 or 15, **characterised in that** the outer sintered glass layer consists of a plurality of sintered glass layers of differing pore size, wherein the layer having the smallest average pore size forms the boundary surface with respect to the continuous aqueous phase.

17. Method according to one or more of claims 14 to 16, **characterised in that** the sintered glass layer(s) consists or consist of borosilicate glass 3.3.

18. Use of a dispersing device comprising a temperature-controlled cylindrical vessel and a rotatable, microporous hollow membrane cylinder (tube) fitted in the centre of the vessel and having an outer membrane layer with pores < 1 $\mu$m for producing a confection according to any of claims 1-8.

19. Use according to claim 18, **characterised in that** the microporous hollow membrane cylinder consists of an inner sintered glass support tube having pores of 5 to 25 $\mu$m and an outer sintered glass layer having a thickness of 1 to 2 mm and a pore size of < 1 $\mu$m.

20. Use according to claim 19, **characterised in that** the mean pore size of the sintered glass layer is 0.4 to 0.8 $\mu$m.

21. Use according to claim 19 or 20, **characterised in that** the outer sintered glass layer consists of a plurality of sintered glass layers of differing pore size, wherein the layer having the smallest average pore size forms the outermost layer.

22. Use according to one or more of claims 19 to 21, **characterised in that** the sintered glass layer(s) consists or consist of borosilicate glass 3.3.

**Revendications**

1. Article de confiserie pouvant être stocké longtemps, sous la forme d'une masse souple, crémeuse, à forme stable et rendue alvéolaire, comprenant :

   - des composants lactés, l'article de confiserie présentant une teneur en albumine de lait de 5,5 à 20 %, en se référant au poids total de l'article de confiserie, une masse sèche de lait sans graisse de 14 à 55 % en poids, en se référant au poids total de l'article de confiserie, et un degré de dénaturation de la protéine de petit lait inférieur ou égale à 10 %,
   - des graisses alimentaires, sachant qu'au moins une partie de la graisse alimentaire est contenue sous forme cristalline à la température ambiante,
   - du sucre et/ou des substituts de sucre, l'article de confiserie ne contenant aucun cristal de lactose perceptible par le consommateur, et
   - de l'eau,

   **caractérisé par** des agglomérats de graisse alimentaire sous forme cristallisée ou non cristallisée, ayant une taille de particules D50,3, en se référant au volume, de 3,5 à 18 $\mu$m.

2. Article de confiserie selon la revendication 1, **caractérisé par** une teneur en graisse alimentaire de 15 à 50 % en poids, en se référant au poids total de l'article de confiserie.

3. Article de confiserie selon la revendication 1 ou 2, **caractérisé par** une teneur en sucre et/ou en substitut de sucre de 8 à 45 % en poids, en se référant au poids total de l'article de confiserie.

4. Article de confiserie selon l'une des revendications précédentes, **caractérisé par** une teneur en eau de 13 à 45 % en poids, en se référant au poids total de l'article de confiserie.

5. Article de confiserie selon l'une ou plusieurs des revendications précédentes, **caractérisé par** une teneur en albumine de lait de 5,5 à 14 % en poids, en se référant au poids total de l'article de confiserie.

6. Article de confiserie selon l'une ou plusieurs des revendications précédentes, **caractérisé par** une masse sèche de lait sans graisse de 14 à 37 % en poids, en se référant au poids total de l'article de confiserie.

7. Article de confiserie selon l'une ou plusieurs des revendications précédentes, **caractérisé par** un degré de dénaturation de 0 %.

8. Article de confiserie selon l'une ou plusieurs des revendications précédentes, **caractérisé par** une taille de particule D50,3 des agglomérats de graisse alimentaire de 4,0 à 16 $\mu$m, en particulier de 4,5 à 14 $\mu$m.

9. Procédé de fabrication d'un article de confiserie selon l'une des revendications 1 à 8, **caractérisé par** les étapes de fabrication suivantes :

   a) mélange de lait entier frais pasteurisé, de lait entier acide ou de yoghourt de lait entier et/ou de lait partiellement écrémé frais pasteurisé, de lait partiellement frais acide, ou de yoghourt partiellement écrémé et/ou de lait maigre frais pasteurisé, de lait maigre acide ou de yoghourt de lait maigre, avec du sucre et/ou des substituts de sucre et, le cas échéant, d'autres ingrédients ;

b) réglage du mélange obtenu à l'étape a) par concentration, effectuée avec ménagement, à une température ≤ 60˚ et à une pression < 1 bar, ou séchage par congélation à la teneur en substance sèche souhaitée ;

c) dispersion d'une graisse alimentaire et, le cas échéant, d'une phase grasse comprenant des émulsifiants dans le mélange aqueux concentré obtenu à l'étape b), sur un cylindre creux à membrane microporeux rotatif, dont la surface extérieure est tournée vers la phase aqueuse et la face intérieure est tournée vers la phase grasse, la face tournée vers la phase aqueuse présentant une couche de membrane extérieure ayant des pores < 1 μm.

d) pasteurisation de l'article de confiserie obtenu à l'étape c) à des températures maximales de 80˚C ; et

e) refroidissement de l'article de confiserie, le cas échéant mélange de microcristaux de lactose ; moussage de l'article de confiserie par insufflation de gaz et cristallisation d'au moins une partie de la graisse alimentaire de l'article de confiserie.

10. Procédé de fabrication d'un article de confiserie selon l'une des revendications 1 à 8, **caractérisé par** les étapes de procédé de fabrication ci-après :

a) mélange de lait entier frais pasteurisé, de lait entier acide, ou de yoghourt de lait entier et/ou de lait partiellement écrémé frais pasteurisé, de lait partiellement écrémé acide, ou de yoghourt partiellement écrémé et/ou de lait aigre frais pasteurisé, de lait maigre acide ou de yoghourt de lait maigre, avec du sucre et/ou des substituts de sucre et, le cas échéant, d'autres ingrédients ;

b) dispersion d'une graisse alimentaire et, le cas échéant, d'une phase grasse comprenant des émulsifiants, dans le mélange aqueux concentré obtenu à l'étape a) sur un cylindre creux à membrane microporeux rotatif, dont la surface extérieure est tournée vers la phase aqueuse et la face intérieure est tournée vers la phase grasse, la face tournée vers la phase aqueuse présentant une couche de membrane extérieure ayant des pores < 1 μm.

c) réglage du mélange obtenu à l'étape b) par la concentration effectuée avec ménagement à une température ≤ 60 % et une pression < 1 bar, ou séchage par congélation à la teneur en substance sèche souhaitée ;

d) pasteurisation de l'article de confiserie obtenu à l'étape c), à des températures maximales de 80˚c ; et

e) refroidissement de l'article de confiserie, le cas échéant introduction en mélange de microcristaux de lactose ; moussage de l'article de confiserie par insufflation de gaz et cristallisation d'au moins une partie de la graisse alimentaire de l'article de confiserie.

11. Procédé selon la revendication 9 ou 10, **caractérisé en ce que**, lors de la mise en dispersion des graisses alimentaires, on applique une pression de 0 à 5 bars et on applique une température < 60˚C.

12. Procédé selon l'une des revendications 9 à 11, **caractérisé en ce que** la vitesse périphérique du cylindre creux à membrane microporeux rotatif est réglée à 0,35 à 35 m/s.

13. Procédé selon la revendication 12, **caractérisé en ce que** le cylindre creux à membrane microporeux est un tube en fritte de verre microporeux.

14. Procédé selon la revendication 13, **caractérisé en ce que** le tube en fritte de verre microporeux est composé d'un tube de soutien en fritte de verre intérieur, ayant des pores de 5 à 25 μm, et d'une couche en verre fritté extérieure, d'une épaisseur de 1 à 2 μm et d'une taille de pores < 1 μm.

15. Procédé selon la revendication 14, **caractérisé en ce que** la taille de pores moyenne de la couche de verre fritté est de 0,4 à 0,8 μm.

16. Procédé selon la revendication 14 ou 15, **caractérisé en ce que** la couche frittée en verre extérieure est composée de plusieurs de couches en verre fritté, ayant une taille de pores différente, sachant que la couche ayant la taille de pore moyenne la plus petite forme la face limite par rapport à la phase aqueuse continue.

17. Procédé selon l'une ou plusieurs des revendications 14 à 16; **caractérisé en ce que** la ou les couches en verre fritté est ou sont formée(s) de verre au silicate de bore 3.3.

18. Utilisation d'un dispositif de dispersion comprenant un récipient en forme de cylindre pouvant être soumis à une régulation de température et un cylindre creux à membrane (tube) microporeux rotatif, monté au centre du récipient, avec une couche de membrane extérieure ayant des pores < 1 μm, pour la fabrication d'un article de confiserie, selon l'une des revendications 1 à 8.

**19.** Utilisation selon la revendication 18, **caractérisée en ce que** le cylindre creux en verre microporeux est composé d'un tube de soutien fritté en verre intérieur, ayant des pores de 5 à 25 $\mu$m, et d'une couche de verre fritté extérieure, d'une épaisseur de 1 à 2mm et d'une taille de pores < 1 $\mu$m.

**20.** Utilisation selon la revendication 19, **caractérisée en ce que** la taille de pores moyenne de la couche de verre fritté est de 0,4 à 0,8 $\mu$m.

**21.** Utilisation selon la revendication 19 ou 20, **caractérisée en ce que** la couche de verre fritté extérieure est composée d'une pluralité de couches de verre fritté de tailles de pores différentes, la couche ayant la taille de pores moyenne minimale formant la couche la plus extérieure.

**22.** Utilisation selon l'une ou plusieurs des revendications 19 à 21, **caractérisée en ce que** la ou les couches de verre fritté est ou sont formée(s) de verre au silicate de bore 3.3.

**Fig. 1**